# EUROPEAN PATENT SPECIFICATION

(11) **EP 3 255 016 B1**
(45) Date of publication and mention of the grant of the patent: **30.08.2023**
(21) Application number: 16382266.1
(22) Date of filing: 10.06.2016
(51) Int. Cl.: C02F 3/30, C02F 3/28, C02F 3/34, C02F 3/00

(54) **METHOD FOR STARTING UP AND CONTROLLING A BIOLOGICAL PROCESS FOR AMMONIUM REMOVAL AT LOW AMMONIUM CONCENTRATIONS AND LOW TEMPERATURE THROUGH THE USE OF A TWO STAGE AUTOTROPHIC NITROGEN REMOVAL PROCESS**
VERFAHREN ZUM STARTEN UND STEUERN EINES BIOLOGISCHEN VERFAHRENS ZUR AMMONIUMENTFERNUNG BEI NIEDRIGEN AMMONIUMKONZENTRATIONEN UND BEI NIEDRIGER TEMPERATUR DURCH VERWENDUNG EINES ZWEISTUFIGEN AUTOTROPHEN STICKSTOFFENTFERNUNGSVERFAHRENS
PROCÉDÉ DE DÉMARRAGE ET DE COMMANDE D'UN PROCESSUS BIOLOGIQUE D'ÉLIMINATION D'AMMONIUM À DE FAIBLES CONCENTRATIONS D'AMMONIUM ET À BASSE TEMPÉRATURE PAR L'UTILISATION D'UN PROCÉDÉ EN DEUX ÉTAPES D'UN PROCESSUS D'ÉLIMINATION D'AZOTE AUTOTROPHE

(43) Date of publication of application: 13.12.2017
(73) Proprietor: FCC Aqualia, S.A., 28050 Madrid (ES); Universidade de Santiago de Compostela, 15782 Santiago de Compostela (ES)
(72) Inventor: VAL DEL RIO, María Angeles, 15782 SANTIAGO DE COMPOSTELA (A Coruña) (ES); PEDROUSO FUENTES, Alba, 15782 SANTIAGO DE COMPOSTELA (A Coruña) (ES); MOSQUERA CORRAL, Anuska, 15782 SANTIAGO DE COMPOSTELA (A Coruña) (ES); CAMPOS GÓMEZ, Jose Luis, 15782 SANTIAGO DE COMPOSTELA (A Coruña) (ES); MÉNDEZ PAMPÍN, Ramón, 15782 SANTIAGO DE COMPOSTELA (A Coruña) (ES); MORALES PEREIRA, Nicolás, 28050 MADRID (ES); VÁZQUEZ PADÍN, Jose Ramón, 28050 MADRID (ES); ROGALLA, Frank, 28050 MADRID (ES)
(74) Representative: Clarke, Modet y Cía., S.L.

(56) References cited:
- EP-A1- 1 607 374
- WO-A1-2011/134011
- WO-A1-2015/052279
- WO-A1-2016/046330
- US-A1- 2016 052 811
- CHRISTIAN FUX ET AL: "Biological treatment of ammonium-rich wastewater by partial nitritation and subsequent anaerobic ammonium oxidation (anammox) in a pilot plant", JOURNAL OF BIOTECHNOLOGY, vol. 99, no. 3, 1 November 2002 (2002-11-01), pages 295-306, XP055121402, ISSN: 0168-1656, DOI: 10.1016/S0168-1656(02)00220-1
- IRENE JUBANY ET AL: "Start-up of a nitrification system with automatic control to treat highly concentrated ammonium wastewater: Experimental results and modeling", CHEMICAL ENGINEERING JOURNAL, vol. 144, no. 3, 1 November 2008 (2008-11-01), pages 407-419, XP055297302, CH ISSN: 1385-8947, DOI: 10.1016/j.cej.2008.02.010
- VADIVELU ET AL: "Effect of free ammonia on the respiration and growth processes of an enriched Nitrobacter culture", WATER RESEARCH, ELSEVIER, AMSTERDAM, NL, vol. 41, no. 4, 25 January 2007 (2007-01-25), pages 826-834, XP005858594, ISSN: 0043-1354, DOI: 10.1016/J.WATRES.2006.11.030
- ANTHONISEN A.C. ET AL: "Inhibition of nitrification by ammonia and nitrous acid", J. WATER POLLUT. CONTROL FED., vol. 48, no. 5, 31 May 1976 (1976-05-31), pages 835-852, XP055809369,

## Description

### FIELD OF THE INVENTION

The present invention relates to a method for starting up and controlling a biological process for ammonium removal from wastewater having a low ammonium concentration (≤ 110 mg N/L) and a low/moderate temperature (5-25 °C).

### STATE OF THE ART

Nutrients removal (mainly nitrogen, N, and phosphorus, P) from wastewater is necessary to avoid the eutrophication of receiving waters and other harmful effects. The discharge of wastewater containing nitrogen is limited by the European Directive on urban wastewater and therefore, its disposal needs to be carried out in Wastewater Treatment Plants (WWTPs). Organic matter and nutrients removal in the conventional activated sludge reactors in WWTPs is intense in energy demand and produces sludge and greenhouse gases. The application of alternative biological processes can reduce the energy requirements of the WWTPs and bring them closer to energy autarky or even to become net energy producers with high reduction of the WWTPs operational costs.

### Conventional nitrogen removal

The biological removal of the nitrogen present in urban wastewaters and in most industrial waters is carried out traditionally through the combination of the biological processes of nitrification and denitrification.

Nitrification is the ammonium oxidation to nitrite or nitrate. This process consists of two stages; the oxidation of the ammoniacal nitrogen to nitrite (equation [1]), carried out by autotrophic Ammonium Oxidizing Bacteria (AOB) and the subsequent oxidation of the nitrite to nitrate (equation [2]) carried out by autotrophic Nitrite Oxidizing Bacteria (NOB).

NH₄⁺ + 1.5 O₂ → NO₂⁻ + H₂O + 2 H⁺ [1]

NO₂⁻ + 0.5 O₂ → NO₃⁻ [2]

During the denitrification process, the nitrate and nitrite formed during the nitrification process are reduced to nitrogen gas under anoxic conditions, consuming organic matter (equations [3]). This process is carried out by denitrifying heterotrophic bacteria:

8 NO₃⁻ + 5 CH₃COOH → 8 HCO₃⁻ + 6 H₂O + 2 CO₂ + 4 N₂ [3]

The conventional activated sludge units can be designed to remove nitrogen through assimilation and nitrification/denitrification when the following conditions are met:
- a long sludge age to maintain the nitrifying bacteria (about 10 days at temperatures of 15 °C);
- an oxygenation consumption rate of 4.7 kg O₂/kg N;
- a biodegradable Chemical Oxygen Demand (COD) to Nitrogen ratio (COD/N) greater than 5 kg/kg. If this ratio is lower than 5, it is necessary to add an external carbon source, what makes the operation more expensive.

### Anammox based processes

The Anaerobic Ammonium Oxidation process (Anammox) is carried out by a group of autotrophic bacteria able to oxidize the ammonium to nitrogen gas using nitrite as electron acceptor (equation [4]), without the need of supplying oxygen or organic matter:

NH₄⁺ + 1.32 NO₂⁻ + 0.066 HCO₃⁻ + 0.13 H⁺ → N₂ + 0.26 NO₃⁻ + 0.066 CH₂O_{0.5}N₀.₁₅ + 2 H₂O [4]

Anammox bacteria belong to the phylum Planctomycetes, and their optimum temperature and pH are 35 °C and 8.0, respectively. The productivity of these bacteria is low, they have a slow growth rate and their doubling time is high (10 days at 35 °C). Hence, it is necessary that the process be operated in reactors that have good biomass retention capacity.

### Combination of the Partial Nitritation (PN) and Anammox processes

The combination of the Partial Nitritation (PN) and the Anaerobic Ammonium Oxidation process (Anammox) in the wastewater treatment is well known in the art.

Jubany, Irene et al. in the article "Start-up of a nitrification system with automatic control to treat highly concentrated ammonium wastewater: Experimental results and modeling" (Chemical Engineering Journal, 2008, vol. 144, no 3, p. 407-419) describes a start-up of a biological nitrifying system to treat high-strength ammonium wastewater with automatic control of a complete nitrification system in a pilot plant. Firstly, a manual start-up was performed with manual increases in the nitrogen-loading rate (NLR). Secondly, two control strategies for controlled start-up based on oxygen uptake rate (OUR) measurements were successfully implemented and compared in the pilot plant. The successful enrichment of the microbial community in nitrifying microorganisms was corroborated with fluorescence in situ hybridization (FISH) quantification. Finally, the results of both controlled start-up strategies were simulated with a mathematical model considering the nitrification as a two-step process.

Flux, Christian et al. in the article "Biological treatment of ammonium-rich wastewater by partial nitritation and subsequent anaerobic ammonium oxidation (anammox) in a pilot plant" (Journal of biotechnology, 2002, vol. 99, no 3, p. 295-306) describes the combination of PN to produce nitrite in a first step and subsequent Anammox in a second reactor. The document is focused on the feasibility of nitrogen removal from digester effluents from two different wastewater treatment plants (WWTPs) with the combined partial nitritation/anammox process.

In the PN process the AOB oxidize the ammonia content of the wastewater to nitrite, according to equation [1]. In order to obtain a wastewater suitable for the subsequent Anammox process, the PN process has to oxidize around half of the ammonia content of the wastewater to nitrite, while the Anammox bacteria use the remaining ammonia and the nitrite to produce the harmless nitrogen gas, following equation [4]. The successful NOB suppression is a precondition for the implementation of this combined system.

This combination implies some advantages in the operation of the WWTPs as:
- No organic matter is needed for nitrogen removal;
- The organic matter can be mostly removed by anaerobic digestion increasing the methane production in the anaerobic digestion process of the WWTP;
- The aeration energy requirements are reduced;
- The sludge production in the nitrogen removal unit is also reduced;
- As well as-N₂O gas emissions which are reduced, due to the fact that the Anammox based processes convert less of the treated nitrogen into N₂O as compared with the conventional nitrification-denitrification processes. This is an advantage since N₂O is a gas with a powerful greenhouse effect.

The combination of PN and Anammox processes is typically used for the treatment of wastewater with a high ammonium concentration (higher than 200 mg N/L) at mesophilic temperatures (25-40 °C), such as the drainage of the digested sludge dehydration system in an urban WWTP (known as sidestream), which can account to around 20% of the total nitrogen input load.

The extension of the application of the combination of PN and Anammox processes to lower temperatures, i.e. below 25 °C, and to lower ammonia concentration streams, i. e. ≤ 110 mg N/L, would permit the application of these processes to domestic wastewater, the mainstream of an urban WWTP, which is typically characterized by such lower temperatures and concentrations. Consequently, the extension of the application of this combination of processes (PN + Anammox) to the remaining 80% of the wastewater flow in an urban WWTP is expected to improve the overall efficiency of the WWTPs, in terms of nitrogen removal, energy efficiency and reduction of Greenhouse Gas (GHG) emissions. In this respect, the authors Dosta, J., et al. in the article "Short- and long-term effects of temperature on the Anammox process" (Journal of Hazardous Materials, 2008, 154 (1-3), 688-693) already studied the feasibility of the application of the Anammox process at temperatures lower than 30 °C (i.e., the optimum temperature to operate the process). Adaptation of the biomass to low temperatures was observed when the biomass was gradually subjected to lower temperatures. The system was successfully operated at 18°C but when temperature was decreased to 15 °C, nitrite started to accumulate, and the system lost its stability.

However, some drawbacks have slowed down the application of the Anammox based processes to wastewaters characterized by low ammonia loads and low temperatures. Under these conditions, the growth rate of the implied autotrophic organisms is low. In addition, one of the main drawbacks is the growth of the undesirable Nitrite Oxidizing Bacteria (NOB), which competes with the AOB for the oxygen and with the Anammox bacteria for the nitrite. The activity of the NOB reduces the overall nitrogen removal efficiency, since these bacteria consume the nitrite and produce nitrate which must be removed trough other processes. In view of the high cost of biological nutrient removal to meet increasingly stringent limits, nitrogen removal through suppression of NOB is a topic of interest.

Different strategies have been proposed by different authors with the objective of out selecting the NOB and/or favoring the AOB and Anammox selection. At sidestream conditions, characterized by high temperatures and high ammonia concentrations, this objective has been successfully achieved mainly by means of the following mechanisms: the larger AOB growth rate than the NOB one at high temperatures; the larger inhibition by Free Ammonia (FA) and/or Free Nitrous Acid (FNA) for NOB than for AOB and the larger Dissolved Oxygen (DO) affinity for AOB than for NOB. However, under mainstream conditions, i.e. at low temperatures and low nitrogen concentrations, these mechanisms are negligible or act in the opposite sense, favoring NOB activity. Control of NOB suppression in low-strength waste streams such as domestic wastewater remains a challenge. The continuous repression of the NOB bacteria is a key factor in order to achieve high nitrogen removal efficiencies under mainstream conditions.

The authors Hu, Z. et al. in the article "Nitrogen removal by a nitritation- anammox bioreactor at low temperature" (Applied and Environmental Microbiology, 2013, 79(8), 2807-2812) described that the implementation of the technology based on Nitritation-Anammox bioreactors designed to treat wastewaters with high ammonium concentrations at mesophilic temperatures (25 to 40°C) could lead to a more-sustainable technology with energy and cost savings. However, they also acknowledged that the application of Nitritation-Anammox bioreactors at lower temperatures (characteristic of municipal wastewaters except in tropical and subtropical regions) had not yet been explored. To this end, a laboratory-scale (5-liter) Nitritation-Anammox reactor was adapted from 25 °C to 12 °C in 10 days and from 550 to 70 mg NH₄⁺-N/L in 200 days, being operated for 132 days at conditions of low ammonia concentration and low temperature to investigate the feasibility of nitrogen removal by the combination of aerobic Ammonium-Oxidizing Bacteria (AOB) and Anammox. The activities of both Anammox and AOB were high enough to remove more than 90% of the supplied nitrogen. However, the nitrogen removal rate achieved was very low (0.023 g N/L d), probably limited by the use of a one stage configuration. One of the advantages of the present invention is that it is based on a two-stage configuration, which allows increasing the treated load.

WO2016/046330A1 describes process for converting ammonium (NH₄⁺) of a mainstream of a wastewater plant to dinitrogen gas (N₂), including the consecutive steps of i) removing biodegradable carbon compounds in the mainstream, ii) converting ammonium (NH₄⁺) in the mainstream to nitrite (NO₂⁻) in an aerated biological process containing ammonium oxidizing bacteria (AOB) in a nitration vessel; and iii) denitrifying the resulting stream from step ii.) to dinitrogen gas in an anammox vessel.

WO2015/052279A1 describes a method for wastewater nitrogen removal that comprises performing a partial nitritation of wastewater in a biofilm reactor by means of a closed loop control for regulating the ammonium concentration inside the biofilm reactor or in the effluent of the said reactor. The document proposed a complex control loop based on the ammonium concentration, the substrate for the nitritation reaction, in the reactor and it is not based on FNA, indeed in the examples shown the FNA concentration is negligible due to the high pH values. The method is proposed only for biofilm sludge and the percentage of ammonium oxidized is less than 50%.

Furthermore, in WO2015/052279A1 the sidestream liquor is supplemented to the mainstream nitritation unit to have a higher nitrogen concentration in the feeding and to guarantee its performance.

Also Isanta, E., et al. studied in the article "Stable partial nitritation for low-strength wastewater at low temperature in an aerobic granular reactor" (Water Research, 2015, 80(0), 149-158), a partial nitritation process for a low-strength wastewater at low temperature carried out in an aerobic granular reactor. a bench-scale granular sludge bioreactor was operated in continuous mode to treat an influent simulating a pretreated municipal nitrogenous wastewater and the temperature was progressively decreased from 30 to 12.5 °C. Simulations indicated that: (i) NOB would only be effectively repressed when their oxygen half-saturation coefficient was higher than that of ammonia-oxidizing bacteria; and (ii) a lower specific growth rate of NOB was maintained at any point in the biofilm (even at 12.5 °C) due to the bulk ammonium concentration imposed through the control strategy. In Isanta's study the control of the ratio ammonia concentration/dissolved oxygen inside the reactor was used to maintain the partial nitritation without NOB activity. However, when an operational problem caused the rise of the oxygen concentration (as an example due to the lack of feeding), the ammonium depletion enhanced immediately the nitrate production (NOB activity) during the accidental periods. In addition, the control in Isanta's study is based on the use of a relatively high pH, in order to favor the inhibition of NOB by the FA, using a relatively high ammonia concentration in the bulk liquid and, consequently, also in the effluent. However, the ammonia oxidation consumes alkalinity and decreases the pH. Hence, the process is operating in the opposite way to the control system. The present invention however is based, not only on the suppression, but also on the removal of NOB from inside the reactor. Therefore, in the present invention when the conditions for NOB development are accidentally imposed inside the reactor, these bacteria need around 60 days to have a significant activity. In addition, the inhibition based on the accumulation of FNA proposed in the present invention, is favored by the pH decrease caused by the ammonia oxidation. Furthermore, Isanta et al. described that the main NOB genus at all temperatures was *Nitrobacter,* which has a low affinity for the substrateat low concentrations. However, one of the challenges of the present invention was achieving the effective suppression of *Nitrospirae,* a type of NOB with a preference for low concentrations), which are not as easily suppressed in the conditions of low concentration as the *Nitrobacter.*

In addition, Lotti, T., et al. in "Anammox growth on pretreated municipal wastewater" (Environmental Science & Technology, 2014 48(14), 7874-7880) reported the evaluation of the Anammox process in a granular sludge fluidized bed lab-scale reactor continuously fed with the actual effluent of the A-stage (organic matter removal) of the WWTP of Dokhaven, Rotterdam. In particular, evidence for growth of Anammox bacteria at mainstream conditions was demonstrated for the entire temperature range tested (10-20 °C), and new granules were shown to be actively formed and efficiently retained in the system.

We can also cite some patent documents referred to inventions related to the technology of biological removal of nitrogen from wastewater:
European Patent EP-2740713 refers to a method for starting up and controlling a biological process for removing nitrogen contained in wastewater through a combined stage of nitritation and anaerobic oxidation of ammonium ion (Anammox). However, contrary to the present invention, the aerobic reaction of partial nitritation and the anoxic reaction with ammonium and nitrite autotrophic denitrifying bacteria take place at the same time in the same reactor. Besides, the invention as disclosed in EP-2740713 is not suitable for treating the mainstream of an urban Wastewater Treatment Plant.

US-2014069864 discloses an invention referring to one or more reactors and one or more control methods for nitrogen removal in wastewater treatment. The aim of the invention is maintaining high Ammonia Oxidizing Bacteria (AOB) oxidation rates while achieving Nitrite Oxidizing Bacteria (NOB) out-selection, using various control strategies, including: (1) ammonia and the use of ammonia set points; (2) operational DO and the use of DO set points; (3) bioaugmentation of Anammox and lighter flocculent AOB fraction; and (4) implementation of transient anoxia in several reactor configurations and conditions for removal of oxidized nitrogen using Anammox or heterotrophic organisms.

Also US-2014263041 discloses a reactor and control method for maximizing nitrogen removal and minimizing aeration requirements through control of transient anoxia and aerobic periods, repression of NOB, and control of dynamic DO concentrations or aeration interval by keeping the reactor NH₄ and NOx concentrations approximately equal. Controls are provided making use of: (1) real time measurement of ammonia, nitrite, nitrate; (2) operational DO and the proper use of DO set points and (3) proper implementation of transient anoxia within a wide range of reactor configurations and operating conditions.

The process of nitrogen removal proposed by US-2014069864 and US-2014263041 takes place by a one-stage configuration to perform simultaneously the Partial Nitritation and Anammox processes, with a complex control system based on the measurement through probes of ammonia, nitrite and nitrate to avoid the NOB development. Although some claims include the possibility of performing both processes separately, this possibility is not the core of the proposals. Furthermore, nowadays the probes developed for ammonia, nitrite and nitrate measurements have different problems of stability associated with them, which complicates a good process control based on their measurement. On the contrary, the invention proposed in this document is based on the use of a two-stage configuration to separate the nitritation and Anammox process in order to have a simpler control for NOB suppression based on inhibitory free nitrous acid concentrations.

Finally, the invention disclosed in CA-2909403 refers to a process for biological removal of nitrogen from wastewater comprising: (1) providing a stream of wastewater comprising ammonium; (2) continuously supplying the stream of wastewater to a reactor containing granular sludge comprising granules having a core of Anammox bacteria and an outer rim of Ammonia Oxidizing Bacteria; (3) subjecting the wastewater in the reactor to ammonium oxidation under ammonium oxidizing conditions comprising a temperature in the range of from 5 to 25 °C, a concentration of dissolved oxygen in the wastewater in the range of from 0.4 mg/L to 4.0 mg/L, and a hydraulic retention time of the wastewater in the reactor in the range of from 0.5 hours to 1.5 days, to obtain a gaseous stream comprising nitrogen and a dispersion of granular sludge and no granular sludge in treated wastewater. Contrary to the present invention, both the Anammox bacteria and the Ammonia Oxidizing Bacteria are located in the same reactor.

The present invention is proposed as an advantageous solution to solve the problems detected in the field related to the nitrogen removal from wastewater using autotrophic biological processes, mainly:
- difficulties to achieve NOB suppression to perform nitritation at low ammonia and/or low temperature; and
- achieving an adequate growth and activity of AOB and Anammox bacteria at low ammonia and/or low temperature.

Furthermore, the strategy proposed in the present invention offers the advantage of being a simpler solution than the inventions disclosed in the state of the art.

### BRIEF DESCRIPTION OF THE INVENTION

It is a first object of the invention a method for starting up and controlling a biological autotrophic process for removing nitrogen contained in a wastewater stream at a temperature between 5 and 25 °C and comprising anammonium concentration equal to or below than 110 mg N/L characterized in that it comprises a combination of at least the following two stages, performed in separate units:
- a first stage wherein the wastewater stream is provided to at least one partial nitritation reactor transforming the ammonium to nitrite in the presence of Ammonia Oxidizing Bacteria (AOB) and oxygen while at the same time Free Nitrous Acid (FNA) is accumulated wherein the FNA concentration is between 0.02 and 0.4 mg N/L inside the partial nitritation reactor, wherein the partial nitritation reactor contains biomass having Nitrite Oxidizing Bacteria (NOB) activity and the start-up of the partial nitritation reactor comprises adding into the partial nitritation reactor at the beginning of the partial nitritation process a NOB inhibitor, nitrogenous metabolic intermediate and/or toxic substance over the activity of the NOB selected from a group consisting of nitrourea (CH₃N₃O₃), hydroxylamine (H₃NO), sodium azide (NaN₃), sodium chloride (NaCl), hydrazine (N₂H₄) and potassium chlorate (KClO₃), and any combinations thereof; and
- a second stage wherein a controlled effluent leaving the partial nitritation reactor and containing an ammonium to nitrite ratio from 0.7 to 1.0 g N/ g N is fed into at least one anoxic reactor with a solid retention time of at least 60 days, wherein an Anammox process takes place transforming the ammonium and nitrite to nitrogen gas by means of an anoxic reaction performed by autotrophic denitrifying bacteria belonging to the phylum Planctomycetes.

The FNA concentration between 0.02 and 0.4 mg N/L has a NOB suppression activity (Vadivelu, V.M., et al., 2006,"The inhibitory effects of free nitrous acid on the energy generation and growth processes of an enriched Nitrobacter culture",Environmental Science & Technology, 40(14), 4442-4448). It is to be noted that the final FNA concentration is mainly influenced by the pH value inside the nitritation reactor in addition to other factors such as the temperature or the nitrite concentration (Anthonisen, A.C., et al., 1976,"Inhibition of Nitrification by Ammonia and Nitrous Acid",Journal Water Pollution Control Federation, 48(5), 835-852). However, the influence of the temperature and nitrite concentration is not significant as compared with the influence of the pH, said low influence being demonstrated by their low fluctuation ranges under mainstream conditions. Summarizing, once the nitrite is accumulated (in an ammonium to nitrite ratio (NH₄⁺-N/NO₂⁻-N of 0.7-1.0), the FNA concentration required to suppress the Nitrite Oxidizing Bacteria (NOB) activity is between 0.02 and 0.4 mg N/L.

The process allows different configurations, provided there is a first nitritation stage and a second stage corresponding to the Anammox process. Thus, more than one reactor can be used to carry out each one of the two stages, working in parallel or in series.

In another aspect, when the ammonium to nitrite ratio in the effluent of the partial nitritation reactor is from 0.7 to 1.0 g N/ g N, the total effluent leaving the partial nitritation reactor goes from the partial nitritation reactor to the anoxic reactor.

In another aspect, when the ammonium to nitrite ratio in the effluent of the nitritation reactor is lower than 0.7 g N/ g N, a fraction from 1% to 50% of the wastewater stream is bypassed directly to the at least one anoxic Anammox reactor wherein it is mixed with the effluent of the nitritation reactor resulting in a mixture with an ammonium to nitrite ratio from 0.7 to 1.0 g N/ g N.

To maintain the adequate ammonia to nitrite ratio in the effluent of the partial nitritation reactor for the subsequent Anammox process it is possible to control the Dissolved Oxygen (DO) concentration, which should be maintained between 0.1 and 8.0 mg O₂/L.

The AOB, and/or the Anammox bacteria may be in or arranged in a biofilm either in the form of granules or attached on a support material inside the reactor.

In a preferred embodiment the Ammonia Oxidizing Bacteria proceeds from a partial nitritation reactor at sidestream conditions, said conditions being a temperature above 25°C and an ammonium concentration higher than 110 mg N/L

In another aspect, the method of the present invention comprises a further step of regenerating the Ammonia Oxidizing Bacteria (AOB) inside the partial nitritation reactor by exchanging a percentage between 5 and 50% in weight of said bacteria by new one coming from at least a second partial nitritation reactor operated at high ammonium concentration, above 110 mg N/L and high temperature, above 25 °C, with a periodicity between 20 and 365 days.

In another aspect the method of the present invention comprises a further step of regenerating the autotrophic denitrifying bacteria inside the anoxic reactor by exchanging a percentage between 5 and 50% in weight of said bacteria by new one coming from at least a second anoxic reactor operated at high ammonium concentration, above 110 mg N/L, and high temperature, above 25 °C, with a periodicity between 20 and 365 days.

By means of said Anammox process, the ammonium and nitrite are removed by autotrophic denitrifying bacteria of the phylum Planctomycetes which are selectively grown and retained inside the reactor. This Anammox process is controlled by: (1) an adequate ammonia/nitrite ratio coming from the previous partial nitritation reactor; and (2) an adequate balance between the growth at mainstream conditions and the wash out of biomass, maintaining a good biomass retention and high values of the solids retention time (SRT at least 60 days).

According to the present invention, the NOB suppression is based on the use of FNA inhibitory concentrations (between 0.02 and 0.4 mg N/L). Along the process, said NOB bacteria are selectively removed from the reactor while the AOB are retained, which is an advantage of the process. Consequently, undesired nitrite oxidation to nitrate is minimized. The selective removal of the NOB from the partial nitritation reactor allows: (1) to operate the process at a relatively high dissolved oxygen concentration (preferably between 0.1 and 8.0 mg 02/L), which is advantageous for the conversion rate in the nitritation step, and consequently to achieve a high overall nitrogen removal rate, i.e. preferably > 0.2 kg N/(m³d); and (2) high stability and robustness, since NOB bacteria are not present inside the reactor (or they are in a minimal concentration, in such a way that no more than 10% of the nitrite is oxidized to nitrate by the NOB), and at least 60 days will be required until they reach a significant activity inside the partial nitritation reactor. This gives time to the operators to modify the reactor conditions and bring them again to inhibitory conditions for NOB growth.

Furthermore, the use of separate units for the partial nitritation and the Anammox process allows: (1) accumulating FNA inside the partial nitritation reactor to inhibit the NOB, as the Anammox bacteria do not consume the nitrite in the same reactor and (2) using relatively high Dissolved Oxygen (DO) concentrations (as described above, between 0.1 and 8.0 mg O₂/L,) without inhibiting the Anammox bacteria, which allows achieving a higher ammonia oxidizing activity. The simultaneous application of the partial nitritation and Anammox process in the same unit is avoided, since the Anammox process consumes the nitrite produced by the AOB and, consequently, consumes the self-created NOB inhibitor. In this sense, the present invention is different from other inventions of the state of the art, based on using a single-stage (or unit) for both processes.

### BRIEF DESCRIPTION OF THE DRAWINGS

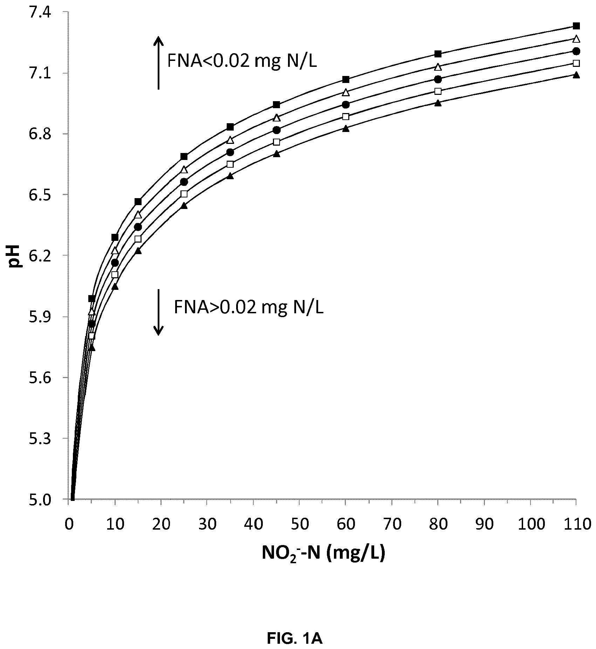

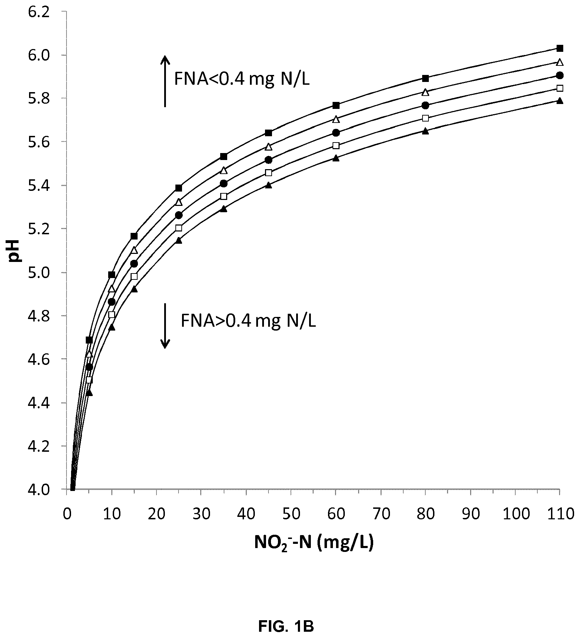

**Figure 1** (corresponding to Figure 1A and Figure 1B) shows a graphical representation of FNA profile applying the equation proposed by Anthonisen et al. (1976) at different temperatures: 5 °C (■), 10 °C (Δ), 15 °C (●), 20 °C (□) and 25 °C (▲):
   **Figure A** shows a graphical representation of the operational range to inhibit NOB in terms of pH and nitrite concentration for: FNA<0.02 mg N/L (above, no desirable zone) and FNA>0.02 mg N/L (below, desirable zone);
   **Figure B** shows a graphical representation of the operational range to avoid the inhibition of AOB in terms of pH and nitrite concentration for: FNA<0.4 mg N/L (above, desirable zone) and FNA>0.4 mg N/L (below, no desirable zone).
**Figure 2** shows a two-stage configuration, according to the present disclosure, for autotrophic nitrogen removal under mainstream conditions. Unit 1 represents the partial nitritation reactor and Unit 2, the Anammox reactor.
**Figure 3** shows the evolution of nitrogen compounds in the reactor of Example 2: NH₄⁺ is the influent (●) and NH₄⁺ (O), NO₂⁻ (∗) and NO₃⁻ (▲) in the effluent in mg N/L.
**Figure 4** shows the evolution of FNA (-, in black) in mg N/L and pH (-, in gray) in the PN reactor of Example 2.
**Figure 5** (corresponding to Figure 5A and Figure 5B) shows the Anammox activity of the biomass (in g N/g VSS.d):
   **Figure 5A** shows the results of a partial nitritation/Anammox single reactor for days of operation: 1 (●), 69 (■), 91 (◇) and 167 (▲);
   **Figure 5B** shows the results of the Anammox reactor for batch tests (O) and for a continuous reactor (□) (data from Dosta, J., et al., (2008), "Short- and long-term effects of temperature on the Anammox process", Journal of Hazardous Materials, 154(1-3), 688-693).

### DETAILED DESCRIPTION OF THE INVENTION

As it has been briefly described hereinabove, the present invention is related to a method for starting up and controlling a biological autotrophic process for removing nitrogen contained in wastewater, under the conditions of the mainstream line of a WWTP (low nitrogen concentration, equal to or below than 110 mg N/L and low/moderate temperature, 5-25 °C), preferably after the removal of most of the organic matter (by means of any conventional method of the state of the art), through the application of two separate processes 1) the partial nitritation process, wherein the development of the NOB is inhibited and 2) an anaerobic oxidation of ammonium process (Anammox). This method maximizes nitrogen removal, minimizes aeration requirements, and improves the WWTPs energy self-sufficiency.

Accordingly, an embodiment of the present invention provides a process comprising:
a) Continuously supplying a stream of wastewater containing ammonium in an amount equal to or less than 110 mg N/L and having an inorganic carbon to nitrogen (IC/N) ratio lower than 5 kg IC/kg N and more preferably lower than 2 kg IC/kg N, or a fraction of the stream (from 50% to 100%) to at least one partial nitritation reactor containing biomass (Ammonia Oxidizing Bacteria, AOB) that performs the aerobic oxidation of ammonium to nitrite, under oxidic conditions, according to equation [1]:
   - If the wastewater contains an inorganic carbon to nitrogen (IC/N) ratio in the range between 1 and 1.25, then, the complete wastewater stream is treated in the first process (100%), and half of the ammonium is oxidized to nitrite. In this way, the effluent of the nitritation reactor has an ammonium to nitrite concentration ratio of 0.7 - 1 g N/ g N;
   - If the wastewater contains an IC/N ratio lower than 1, then, the complete wastewater stream is treated in the first process (100%) but an external source of alkalinity has to be added in order to achieve a NH₄⁺-N/NO₂⁻-N ratio of 0.7 - 1 in the effluent;
   - If the wastewater contains an IC/N ratio from 1.25 to 2 (1.25 < IC/N < 2) the stream treated in the nitritation reactor is between 50 and 100% of the flow, and the ammonium concentration oxidized to nitrite is between 100 and 50%, respectively;
   - If the wastewater contains an IC/N ratio higher than 2, then, half of the stream (50%) is treated in the nitritation reactor, and the ammonium concentration is completely oxidized to nitrite;
b) In the second process (Anammox reactor), the ammonium that was not oxidized in the previous unit, and the nitrite produced in the partial nitritation process are combined to be removed from the wastewater in the form of nitrogen gas, through an anoxic reaction performed by autotrophic denitrifying bacteria belonging to the phylum Planctomycetes, according to equation [4].

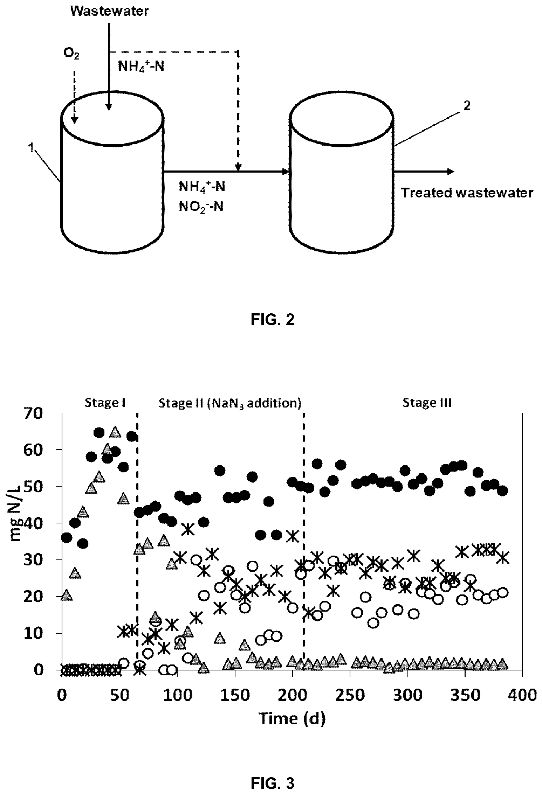

**Figure 2** shows a two-stage configuration or system for carrying out the method as claimed for starting up and controlling a biological autotrophic process for removing the nitrogen contained in a wastewater stream under mainstream conditions. In particular it shows a partial nitritation reactor (1) and an Anammox reactor (2).In a preferred embodiment of the invention the reactors may comprise means for measuring the following parameters: pH, concentration of dissolved oxygen (DO), alkalinity, wastewater and/or air/oxygen flow rate supplied, etc. Said means may consist of probes, measuring equipment and/or flow meters. The measurement of the parameters may be recorded through an automated control system, which may act on the hydraulic residence time, the air/oxygen supply to the reactor, the addition of the inhibitor and/or the pH control.

### Partial Nitritation reactor

Partial Nitritation is accomplished through the achievement of AOB high rates and through NOB out selection. In particular, the partial nitritation reactor treating low strength wastewaters at low temperature may be started by one of the following strategies.
(a) In a particular embodiment of the invention wherein the biomass of the reactor has NOB activity at the moment of the start-up of the operation, the start-up of the partial nitritation reactor will comprise the following two stages:
   (1) adding into the partial nitritation reactor a specific NOB inhibitor, nitrogenous metabolic intermediate and/or toxic substance over the activity of the NOB at the beginning of the operation (start-up). The specific inhibitor (or combination of inhibitors) of NOB would be added in a concentration range that inhibits NOB bacteria without affecting the AOB activity. The inhibitor, nitrogenous metabolic intermediate and/or toxic substance or combination of substances acts as a "nitrite accumulation activator" to achieve the NOB suppression and reach the partial nitritation at mainstream conditions. The presence of this substance ("nitrite accumulation activator") should not negatively affect the activity of the AOB (or at least affect it in a very low level). In this sense, different types of external or internal compounds could be used, which act as NOB inhibitors, nitrogenous metabolic intermediates or toxic substances over the activity of the NOB, selected from a group consisting of nitrourea (CH₃N₃O₃), hydroxylamine (H₃NO), sodium azide (NaN₃), sodium chloride (NaCl), hydrazine (N₂H₄) or potassium chlorate (KClO₃). Besides, the addition of the activator promotes the accumulation of nitrite, as the consumption of this compound by the NOB is limited. Consequently, the nitrite is not oxidized to nitrate. The accumulation of nitrite with an adequate pH in the partial nitritation reactor serves to achieve FNA concentrations in the partial nitritation reactor in a range inhibitory for NOB. Therefore, the produced FNA acts as the "real inhibitory compound", while the substance added was only the "nitrite accumulation activator". The pH will be the adequate to maintain a FNA concentration equal to or higher than 0.02 mg N/L. Thus, the inhibitory FNA values achieved with this start-up avoid the development of NOB, and, in consequence, facilitate the accumulation and growth of AOB and facilitate the accumulation of nitrite and ammonia in the right proportion. Figure 1 shows that the optimal FNA range is preferably achieved with adequate pH values (preferably between 5.0 and 7.5), although it also depends on the temperature. The relation between the temperature and the FNA concentration can be observed in Figure 1. The FNA concentration (for the same pH and nitrite concentration) is higher at lower temperatures. In this way, the low temperature of the wastewater at mainstream conditions favors the strategy for NOB suppression based on FNA;
   (2) after a stable period of nitrite accumulation in the partial nitritation reactor (at least one week), the addition of the external specific inhibitor, nitrogenous metabolic intermediate and/or toxic substance over the activity of the NOB is stopped and the partial nitritation is maintained due to the accumulated FNA. This accumulated FNA serves afterwards (once the specific NOB inhibitor is no longer added during the long term operation of the reactor) as the actual and "in situ created" NOB inhibitor for the process. The partial nitritation process is controlled by the FNA concentration inside the system, which needs to be higher than 0.02 mg N/L to maintain the NOB inhibition;
(b) In an alternative embodiment not comprised within the present invention wherein biomass without NOB activity is used, the addition of the specific inhibitor, nitrogenous metabolic intermediate and/or toxic substance is not necessary. Therefore, the start-up of the partial nitritation reactor is carried out using as inoculum the biomass (nitrifying sludge) from a partial nitritation reactor at sidestream conditions (temperature above 25 °C, and ammonium concentration above 110 mg N/L) under which AOB activity is high and NOB activity is negligible. Due to the fact that the growth of the NOB under the new conditions is not immediate (it takes at least 60 days), the high AOB activity provokes the initial nitrite accumulation and, for hence, FNA accumulation. Reaching values of FNA higher than 0.02 mg N/L avoids NOB growth and development. In this case, if the NOB suppression is not as effective as wanted, this alternative could also be combined with the first one explained in point (a).

In a preferred way, the temperature of operation in the partial nitritation reactor may range from 5 to 25 °C, the concentration of dissolved oxygen (DO) in the wastewater may range from 0.1 mg O₂/L to 8.0 mg O₂/L, and the hydraulic retention time of the wastewater in the reactor may vary from 4 hours to 2 days.

In addition, in a preferred embodiment of the invention the method may further comprise a step of exchanging Ammonia Oxidizing Bacteria (AOB) from at least a second partial nitritation reactor operated at high ammonia (> 110 mg N/L) and high temperature (> 25 °C) conditions, i.e. at sidestream conditions, in order to refresh the partial nitritation biomass and increase the activity inside the first partial nitritation reactor wherein the method as claimed takes place. The biomass exchange will be used in an adequate ratio (5-50%) and periodicity (20-365 days) to maintain a high removal rate.

### Anammox reactor

The wastewater treated in the partial nitritation reactor or the mixture of it with raw water(if only part of the total wastewater flow is treated in the previous partial nitritation stage), is then transferred to another unit, where the Anammox process takes place. This process is operated in an Anammox reactor in anoxic conditions, in order to avoid the development of aerobic organisms (AOB or NOB) which can compete for the nitrite or ammonium with the Anammox bacteria.

The Anammox bacteria at low temperature (5-25 °C) have a low growth rate. Therefore, it is important to obtain good biomass retention inside the reactor to guarantee a minimal biomass loss in the effluent and to achieve a high solid concentration, preferably more than 1 g Volatile Suspended Solid (VSS)/L, and more preferably between 2.0 and 20.0 g VSS/L. The retention time of the Anammox biomass sludge inside the reactor will be of at least 60 days and preferably between 60 and 150 days. This retention time may be achieved by means of granular or biofilm biomass, in order to obtain a better biomass retention. It can also be therefore with or without and external natural or artificial supporting material. Besides, membranes may be used to filtrate the effluent and achieve a better effluent quality in combination or in addition to settler systems to improve the separation of the biomass from the wastewater.

In a preferred embodiment of the invention the method will further comprise a step of exchange of the Anaerobic Ammonium Oxidizing Bacteria (Anammox) by introducing new bacteria from at least a second Anammox reactor operated at high ammonia (> 110 mg N/L) and high temperature (>25 °C) conditions in order to refresh the Anammox biomass and to increase its activity. The biomass exchange will be used in an adequate ratio (5-50%) and periodicity (20-365 days) to maintain a high removal rate.

### EXAMPLES

### Example 1

In a first example it was proven that the start-up and control method of the process described herein achieves the partial nitritation at 15±1 °C and 50 mg N-NH4+/L, with synthetic wastewater, using as initial inhibitor sodium azide at a concentration of 5 mg/L in the partial nitritation reactor feeding. After achieving the nitrite accumulation in the partial nitritation reactor, the addition of the NOB inhibitor was removed. Nevertheless, the NOB repression was maintained because of the presence of FNA concentrations always higher than 0.02 mg N/L, due to the accumulation of nitrite in the bulk liquid and the pH value.

### Example 2

In this example, the start-up of a partial nitritation reactor operated at laboratory scale was carried out following the method described in the present invention. A reactor with a useful volume of 2 L was operated in cycles of 3 hours, distributed as: 158 min of simultaneous feeding and aeration, 20 min of settling and 2 min of withdrawal. The reactor was maintained at 17 ± 1 °C and fed with synthetic wastewater containing 50 mg NH₄⁺-N/L. The hydraulic retention time (HRT) was of 0.29 days.

The operation was divided in three stages (as shown in **Figure 3**). During the first 65 days (Stage I) the dissolved oxygen (DO) concentration was maintained below 1 mg O₂/L and the biomass concentration around 6.5 g VSS/L. During this period the ammonia was completely oxidized to nitrate, thus the AOB and NOB were active and the total nitrification was achieved.

Then, in Stage II (65-210 days), and following the method described in the present invention, the synthetic feeding was supplemented with 5 mg/L of sodium azide as activator of partial nitritation. The addition of this compound inhibited the activity of the NOB after 55 days. Consequently, nitrite was accumulated in the system. Around day 120 the nitrate concentration measured in the effluent was close to zero.

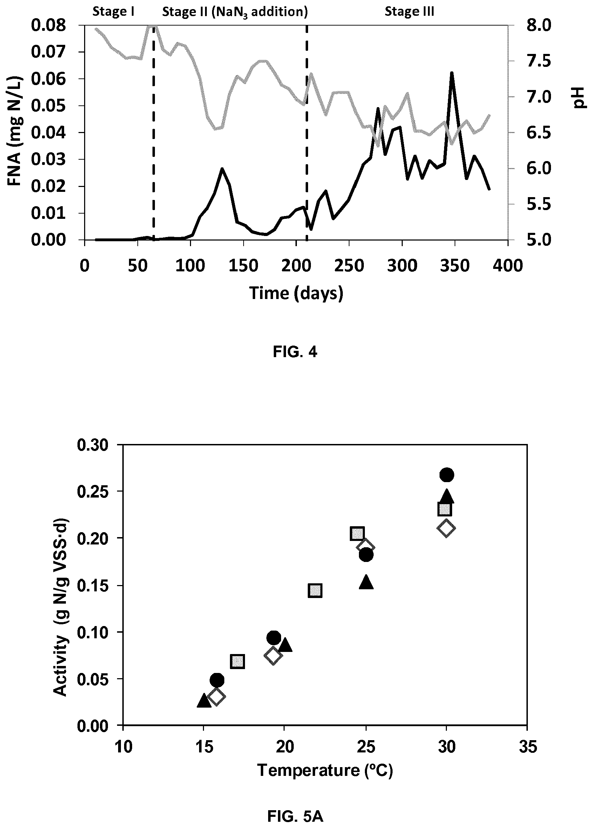

In Stage III (from day 210 on) sodium azide was no longer added to the system. The NOB activity in the reactor was negligible despite sodium azide was not added for 174 days, thanks to the inhibitory effect of the FNA accumulated in the system (see Figure 4). This was due to the synergetic effect of the nitrite accumulated in the system and the pH value, despite the application of DO concentrations ranged from 1 to 3 mg O2/L. Furthermore, the solids retention time (SRT) in this stage was always higher than 75 days.

An Anammox reactor can treat the effluent of the partial nitritation reactor in order to completely remove autotrophically the nitrogen content of the wastewater through the combination of partial nitritation and Anammox based processes. The addition of sodium azide is effective to start up the inhibition of the NOB activity (Table 1) and to achieve the partial nitritation under mainstream conditions. The FNA accumulated in this start up period maintains the partial nitritation stability in a long term operation.

**Table 1. Biomass activities (g N/(g VSS·d)) determined by respirometric assays at 17 °C.**

| Sample | AOB | NOB |
|---|---|---|
| Stage I (day 0) | 0.050 ±0.006 | 0.072 ±0.012 |
| Stage II (day 203) | 0.068 ±0.028 | Not detected |
| Stage III (day 238) | 0.103 ±0.039 | Not detected |
| Stage III (day 288) | 0.220 ±0.011 | Not detected |
| Stage III (days 356-367)* | 0.139 ±0.011 | Not detected |

| | | |
|---|---|---|
| * Average value of activity measured inside the reactor | | |

### Example 3

The continuous repression of the NOB appears as a key factor in order to achieve high nitrogen removal efficiency in a partial nitritation and Anammox process operated in a single stage at mainstream conditions. A partial nitritation and Anammox reactor with a useful volume of 5 L was operated, in cycles of 3 hours, distributed as: 135 min of feeding and aeration, 15 min of mechanical mixing, 28 min of settling and 2 min of withdrawal.

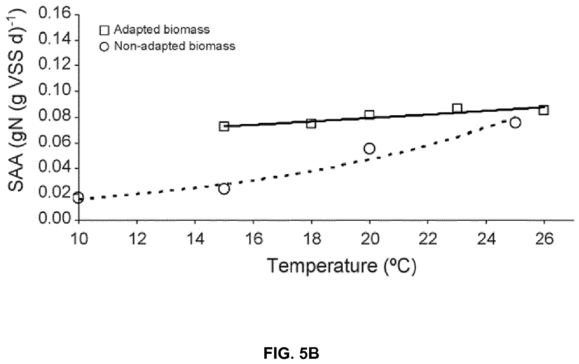

The partial nitritation and Anammox reactor was inoculated with granular biomass from a partial nitritation and Anammox reactor at sidestream conditions (high temperature and nitrogen load) and it was operated during 186 days at mainstream conditions (15°C and 50-80 mg NH₄⁺-N/L). This experience revealed that is not possible to carry out the partial nitritation and Anammox processes in a single stage under these conditions as the autotrophic nitrogen removal failed due to the NOB development, which was observed around 50-60 days after the inoculation. However, this result points out that the measured specific Anammox activity of the overall biomass remained without significant variations during the operation (as shown in **Figure 5A****).** The specific Anammox activity value achieved at low temperature was similar to the one found by other authors (Hu et al., in the article "Nitrogen removal by a nitritation-anammox bioreactor at low temperature" (Applied and Environmental Microbiology, 2013, 79(8), 2807-2812) and Lotti et al. in "Anammox growth on pretreated municipal wastewater" (Environmental Science & Technology, 2014 48(14), 7874-7880)) and coincided with previous experiments performed with batch tests and with a continuous reactor operation (as shown in **Figure 5B** from authors Dosta, J., et al. in the article "Short- and long-term effects of temperature on the Anammox process" (Journal of Hazardous Materials, 2008, 154 (1-3), 688-693)). The Anammox process is therefore possible under mainstream conditions despite having a lower specific activity than under sidestream conditions.

## Claims

1. A method for starting up and controlling a biological autotrophic process for removing nitrogen contained in a wastewater stream at a temperature between 5 and 25 °C and comprising an ammonium concentration equal to or below than 110 mg N/L **characterized in that** it comprises a combination of at least the following two stages performed in separate units:
a first stage wherein the wastewater stream is provided to at least one partial nitritation reactor transforming the ammonium to nitrite in the presence of Ammonia Oxidizing Bacteria (AOB) and oxygen while at the same time Free Nitrous Acid (FNA) is accumulated wherein the FNA concentration is between 0.02 and 0.4 mg N/L inside the partial nitritation reactor, wherein the partial nitritation reactor contains biomass having Nitrite Oxidizing Bacteria (NOB) activity and the start-up of the partial nitritation reactor comprises adding into the partial nitritation reactor at the beginning of the partial nitritation process a NOB inhibitor, nitrogenous metabolic intermediate and/or toxic substance over the activity of the NOB selected from a group consisting of nitrourea (CH₃N₃O₃), hydroxylamine (H₃NO), sodium azide (NaN₃), sodium chloride (NaCl), hydrazine (N₂H₄) and potassium chlorate (KClO₃), and any combinations thereof; and
- a second stage wherein a controlled effluent leaving the partial nitritation reactor and containing an ammonium to nitrite ratio from 0.7 to 1.0 g N/ g N is fed into at least one anoxic reactor with a solid retention time of at least 60 days, wherein an Anammox process takes place transforming the ammonium and nitrite to nitrogen gas by means of an anoxic reaction performed by autotrophic denitrifying bacteria belonging to the phylum Planctomycetes.

2. The method according to claim 1, wherein when the ammonium to nitrite ratio in the effluent of the partial nitritation reactor is from 0.7 to 1.0 g N/ g N, the total effluent leaving the partial nitritation reactor goes from the partial nitritation reactor to the anoxic reactor.

3. The method according to claim 1, wherein when the ammonium to nitrite ratio in the effluent of the nitritation reactor is lower than 0.7 g N/ g N, a fraction from 1% to 50% of the wastewater stream is bypassed directly to the at least one anoxic Anammox reactor wherein it is mixed with the effluent of the nitritation reactor resulting in a mixture with an ammonium to nitrite ratio from 0.7 to 1.0 g N/ g N.

4. The method according to any one of claims 1 to 3, wherein the nitritation stage takes place at a Dissolved Oxygen (DO) concentration between 0.1 and 8.0 mg O₂/L.

5. The method according to any one of claims 1 to 4, wherein the Ammonia Oxidizing Bacteria proceeds from a partial nitritation reactor at sidestream conditions, said conditions being a temperature above 25 °C and an ammonium concentration higher than 110 mg N/L

6. The method according to any one of claims 1 to 5, **characterized in that** it comprises a further step of regenerating the Ammonia Oxidizing Bacteria (AOB) inside the partial nitritation reactor by exchanging a percentage between 5 and 50% in weight of said bacteria by new one coming from at least a second partial nitritation reactor operated at high ammonium concentration, above 110 mg N/L and high temperature, above 25 °C, with a periodicity between 20 and 365 days.

7. The method according to any one of claims 1 to 6, wherein there is a further step of regenerating the autotrophic denitrifying bacteria inside the anoxic reactor by exchanging a percentage between 5 and 50% in weight of said bacteria by new one coming from at least a second anoxic reactor operated at high ammonium concentration, above 110 mg N/L, and high temperature, above 25 °C, with a periodicity between 20 and 365 days.

## Patentansprüche

1. Verfahren zum Starten und Steuern eines autotrophen biologischen Verfahrens zur Entfernung von Stickstoff, enthalten in einem Abwasserstrom mit einer Temperatur zwischen 5 und 25 °C und einer Ammoniumkonzentration von 110 mg N/l oder weniger, **dadurch gekennzeichnet, dass** es eine Kombination von mindestens den folgenden zwei in getrennten Einheiten durchgeführten Stufen umfasst:
eine erste Stufe, in der der Abwasserstrom mindestens einem Teilnitritationsreaktor zugeführt wird, der das Ammonium mithilfe von Ammoniak oxidierenden Bakterien (AOB) und Sauerstoff in Nitrit umwandelt, während gleichzeitig freie salpetrige Säure (FNA) entsteht, wobei die FNA-Konzentration im Inneren des Teilnitritationsreaktors zwischen 0,02 und 0,4 mg N/l beträgt,
wobei der Teilnitritationsreaktor Biomasse mit der Aktivität von Nitrit oxidierenden Bakterien (NOB) enthält und das Ingangsetzen des Teilnitritationsreaktors die Zugabe eines NOB-Hemmers, eines stickstoffhaltigen Stoffwechselzwischenprodukts und/oder einer auf die Aktivität der NOB toxisch wirkenden Substanz, ausgewählt aus der Gruppe bestehend aus Nitroharnstoff (CH₃N₃O₃), Hydroxylamin (H₃NO), Natriumazid (NaN₃), Natriumchlorid (NaCl), Hydrazin (N₂H₄) und Kaliumchlorat (KClO₃) sowie beliebigen Kombinationen derselben, zu Beginn des Teilnitritationsvorgangs in den Teilnitritationsreaktor umfasst; und
- eine zweite Stufe, in der ein kontrollierter Abfluss aus dem Teilnitritationsreaktor mit einem Verhältnis von Ammonium zu Nitrit von 0,7 bis 1,0 g N/ g N in mindestens einen anoxischen Reaktor mit einer Feststoffverweilzeit von mindestens 60 Tagen eingespeist wird, in dem mittels einer von autotrophen denitrifizierenden Bakterien aus dem Stamm der Planctomyceten durchgeführten anoxischen Reaktion ein Anammox-Prozess zur Umwandlung des Ammoniums und Nitrits in Stickstoffgas stattfindet.

2. Verfahren nach Anspruch 1, wobei, wenn das Verhältnis von Ammonium zu Nitrit im Abfluss aus dem Teilnitritationsreaktor 0,7 bis 1,0 g N/ g N beträgt, der gesamte, aus dem Teilnitritationsreaktor austretende Abfluss vom Teilnitritationsreaktor in den anoxischen Reaktor gelangt.

3. Verfahren nach Anspruch 1, wobei, wenn das Verhältnis von Ammonium zu Nitrit im Abfluss aus dem Nitritationsreaktor unter 0,7 g N/ g N liegt, ein Anteil von 1 % bis 50 % des Abwasserstroms direkt in den mindestens einen anoxischen Anammox-Reaktor umgeleitet wird, wo durch seine Vermischung mit dem Abfluss aus dem Nitritationsreaktor ein Gemisch mit einem Verhältnis von Ammonium zu Nitrit von 0,7 bis 1,0 g N/ g N entsteht.

4. Verfahren nach einem der Ansprüche 1 bis 3, wobei die Nitritationsstufe bei einer Konzentration des gelösten Sauerstoffs (DO) zwischen 0,1 und 8,0 mg O₂/l erfolgt.

5. Verfahren nach einem der Ansprüche 1 bis 4, wobei die Ammoniak oxidierenden Bakterien aus einem Teilnitritationsreaktor unter Nebenstrombedingungen stammen, wobei die genannten Bedingungen eine Temperatur von über 25 °C und eine Ammoniumkonzentration von über 110 mg N/l umfassen.

6. Verfahren nach einem der Ansprüche 1 bis 5, **dadurch gekennzeichnet, dass** es als weiteren Schritt die Regeneration der Ammoniak oxidierenden Bakterien (AOB) im Inneren des Teilnitritationsreaktors umfasst, wobei in Abständen von 20 bis 365 Tagen ein Austausch von 5 bis 50 Gew.-% der genannten Bakterien durch neue Bakterien aus mindestens einem, unter hoher Ammoniumkonzentration (über 110 mg N/l) und hoher Temperatur (über 25 °C) betriebenen zweiten Teilnitritationsreaktor erfolgt.

7. Verfahren nach einem der Ansprüche 1 bis 6, wobei ein weiterer Schritt die Regeneration der autotrophen denitrifizierenden Bakterien im Inneren des anoxischen Reaktors darstellt, wobei in Abständen von 20 bis 365 Tagen ein Austausch von 5 bis 50 Gew.-% der genannten Bakterien durch neue Bakterien aus mindestens einem, unter hoher Ammoniumkonzentration (über 110 mg N/l) und hoher Temperatur (über 25 °C) betriebenen zweiten anoxischen Reaktors erfolgt.

## Revendications

1. Procédé de démarrage et de contrôle d'un processus biologique autotrophe d'élimination de l'azote contenu dans un flux d'eaux usées à une température comprise entre 5 et 25 °C et comprenant une concentration d'ammonium égale ou inférieure à 110 mg N/L **caractérisée en ce qu'**elle comprend une combinaison d'au moins les deux étapes suivantes réalisées dans des unités séparées :
une première étape dans laquelle le flux d'eaux usées est fourni vers au moins un réacteur de nitritation partielle transformant l'ammonium en nitrite en présence de bactéries oxydant l'ammoniac (BAO) et d'oxygène, tout en accumulant de l'acide nitreux libre (ANL), la concentration d'ANL étant comprise entre 0,02 et 0,4 mg N/L à l'intérieur du réacteur de nitritation partielle. 4 mg N/L à l'intérieur du réacteur de nitritation partielle, dans lequel le réacteur de nitritation partielle contient de la biomasse ayant une activité de bactéries oxydant les nitrites (NOB) et le démarrage du réacteur de nitritation partielle comprend l'ajout dans le réacteur de nitritation partielle au début du processus de nitritation partielle d'un inhibiteur de NOB, un intermédiaire métabolique azoté et/ou une substance toxique qui inhibe l'activité de la NOB, choisi dans un groupe comprenant la nitrourée (CH₃N₃O₃), l'hydroxylamine (H₃NO), l'azoture de sodium (NaN₃), le chlorure de sodium (NaCl), l'hydrazine (N₂H₄) et le chlorate de potassium (KClO₃), ainsi que toute combinaison de ces substances ; et
- une deuxième étape dans laquelle un effluent contrôlé quittant le réacteur de nitritation partielle et contenant un rapport ammonium/nitrite compris entre 0,7 et 1,0 g N/g N est introduit dans au moins un réacteur anoxique avec un temps de rétention des solides d'au moins 60 jours, dans lequel se déroule un processus Anammox transformant l'ammonium et le nitrite en azote gazeux au moyen d'une réaction anoxique réalisée par des bactéries dénitrifiantes autotrophes appartenant à l'embranchement des phylum Planctomycètes.

2. Procédé selon la revendication 1, dans lequel lorsque le rapport ammonium/nitrite dans l'effluent du réacteur de nitritation partielle est compris entre 0,7 et 1,0 g N/ g N, l'effluent total sortant du réacteur de nitritation partielle va du réacteur de nitritation partielle vers le réacteur anoxique.

3. Procédé selon la revendication 1, dans lequel lorsque le rapport ammonium/nitrite dans l'effluent du réacteur de nitritation est inférieur à 0,7 g N/ g N, une fraction de 1 % à 50 % du flux d'eaux usées est dérivée directement vers le au moins un réacteur anoxique Anammox dans lequel elle est mélangée à l'effluent du réacteur de nitritation résultant en un mélange avec un rapport ammonium/nitrite de 0,7 à 1,0 g N/ g N.

4. Procédé selon l'une quelconque des revendications 1 à 3, dans lequel l'étape de nitritation a lieu à une concentration en oxygène dissous (DO) comprise entre 0,1 et 8,0 mg 02/L.

5. Procédé selon l'une des revendications 1 à 4, dans laquelle la bactérie oxydante d'ammoniac provient d'un réacteur de nitritation partielle dans des conditions de flux secondaire, ces conditions étant une température supérieure à 25 °C et une concentration d'ammonium supérieure à 110 mg N/L.

6. Procédé selon l'une quelconque des revendications 1 à 5, **caractérisé en ce qu'**il comprend une étape supplémentaire de régénération des bactéries oxydantes de l'ammoniac (BAO) à l'intérieur du réacteur de nitritation partielle par échange d'un pourcentage compris entre 5 et 50 % en poids desdites bactéries par de nouvelles provenant d'au moins un second réacteur de nitritation partielle opéré à haute concentration d'ammonium, supérieure à 110 mg N/L et à haute température, supérieure à 25 °C, avec une périodicité comprise entre 20 et 365 jours.

7. Procédé selon l'une quelconque des revendications 1 à 6, dans lequel il y a une étape supplémentaire de régénération des bactéries dénitrifiantes autotrophes à l'intérieur du réacteur anoxique par échange d'un pourcentage compris entre 5 et 50 % en poids desdites bactéries par de nouvelles provenant d'au moins un second réacteur anoxique fonctionnant à forte concentration en ammonium, supérieure à 110 mg N/L, et à haute température, supérieure à 25 °C, avec une périodicité comprise entre 20 et 365 jours.
